# EUROPEAN PATENT APPLICATION

(11) **EP 4 661 540 A1**
(43) Date of publication of application: **10.12.2025**
(21) Application number: 24749625.0
(22) Date of filing: 26.01.2024
(51) Int. Cl.: H04W 72/044

(54) **BEAM MANAGEMENT METHOD AND APPARATUS, TERMINAL, RELAY NODE AND BASE STATION**

(30) Priority: 02.02.2023 CN 202310124739
(71) Applicant: Datang Mobile Communications Equipment Co., Ltd., Beijing 100085 (CN)
(72) Inventor: ZHANG, Xin, Beijing 100085 (CN); SONG, Lei, Beijing 100085 (CN); SU, Xin, Beijing 100085 (CN)
(74) Representative: Studio Torta S.p.A.
(86) International application number: PCT/CN2024/074219
(87) International publication number: WO 2024/160144

(57) **Abstract**

A beam management method, an apparatus, a terminal, a relay node, and a base station is provided. The method is applied to a terminal and includes: receiving a beam measurement signal set sent by a relay node, where the beam measurement signal set includes multiple first beam measurement signals and multiple second beam measurement signals, the first beam measurement signals are associated with transmission beams of a base station, and the second beam measurement signals are associated with transmission beams of the relay node; performing a beam failure detection according to the multiple first beam measurement signals and the multiple second beam measurement signals.

## Description

### CROSS REFERENCE OF RELATED APPLICATION

The present disclosure claims a priority of Chinese Patent Application No. 202310124739.2 filed on February 2, 2023, titled "BEAM MANAGEMENT METHOD, APPARATUS, TERMINAL, RELAY NODE, AND BASE STATION", which is incorporated herein by reference in its entirety.

### TECHNICAL FIELD

The present disclosure relates to the field of communication technologies, and in particular, to a beam management method, an apparatus, a terminal, a relay node, and a base station.

### BACKGROUND

In a wireless communication system with Reconfigurable Intelligent Surface (RIS)-assisted enhanced coverage, the channel from a base station to a user equipment (UE) is a concatenated channel composed of a channel from the base station to the RIS and a channel from the RIS to the UE.

Currently, a UE detects whether a beam failure event occurs and reports the beam failure event. In this process, the UE needs to measure beam quality information and determine whether a beam failure event has occurred based on the beam quality information. However, in a RIS-assisted wireless communication system, since the signal ultimately received by the UE is forwarded by the RIS to the UE, the UE actually directly measures the beam quality of the RIS. If a beam failure event has already occurred between the transmission beam of the base station and the reception beam of the RIS, even if the transmission beam of the RIS and the reception beam of the UE are aligned, the signal quality monitored by the UE cannot meet the monitoring threshold, and the UE will determine that a beam failure has occurred. Since the measurement reference signal is associated with the transmission beam of the base station, the UE cannot determine whether a beam failure event has occurred on the link from the RIS to the UE and can only directly determine that a beam failure event has occurred on the entire link (including the link from the base station to the RIS and the link from the RIS to the UE).

Because the UE cannot determine the specific link where the beam failure occurs, during the beam failure recovery process, it is necessary to perform pairwise measurements on all beams of the entire link, which increases the complexity of beam measurement and prolongs the time required for beam failure recovery, failing to meet the requirements for fast beam switching and resolve communication blockages.

### SUMMARY

Embodiments of this disclosure provide a beam management method, an apparatus, a terminal, a relay node, and a base station, to address the technical problem in the related art where the beam measurement scheme takes a long time for beam failure recovery and cannot meet the requirements for fast beam switching and resolve communication blockages.

In a first aspect, to solve the above technical problem, an embodiment of this disclosure provides a beam management method, applied to a terminal, including:
receiving a beam measurement signal set sent by a relay node, where the beam measurement signal set includes multiple first beam measurement signals and multiple second beam measurement signals, the first beam measurement signals are associated with transmission beams of a base station, and the second beam measurement signals are associated with transmission beams of the relay node;
performing a beam failure detection according to the multiple first beam measurement signals and the multiple second beam measurement signals.

Optionally, the performing beam failure detection according to the multiple first beam measurement signals and the multiple second beam measurement signals includes:
determining whether a beam failure occurs on a first link corresponding to the multiple first beam measurement signals, where the first link is a concatenated channel from the base station to the relay node and then to the terminal;
determining whether a beam failure occurs on a second link corresponding to the multiple second beam measurement signals, where the second link is a channel from the relay node to the terminal;
in a case where it is determined that beam failures occur on both the first link and the second link, determining that a beam failure occurs on the channel from the relay node to the terminal; and
in a case where it is determined that a beam failure occurs on the first link and no beam failure occurs on the second link, determining that a beam failure occurs on a channel from the base station to the relay node.

Optionally, the beam management method further includes:
sending a beam failure message to a base station, where the beam failure message carries at least one of:
first information, the first information being configured to identify that a beam failure occurs on the multiple first beam measurement signals;
second information, the second information being configured to identify that a beam failure occurs on the multiple second beam measurement signals.

Optionally, the determining whether a beam failure occurs on the first link corresponding to the multiple first beam measurement signals includes:
obtaining a first counter value of a first counter, where the first counter value is a count of times a measurement value of each first beam measurement signal does not satisfy a first threshold condition;
determining whether a beam failure occurs on the first link corresponding to the multiple first beam measurement signals according to multiple first counter values corresponding to the multiple first beam measurement signals.

Optionally, the determining whether a beam failure occurs on the second link corresponding to the multiple second beam measurement signals includes:
obtaining a second counter value of a second counter, where the second counter value is a count of times a measurement value of each second beam measurement signal does not satisfy a second threshold condition;
determining whether a beam failure occurs on the second link corresponding to the multiple second beam measurement signals according to multiple second counter values corresponding to the multiple second beam measurement signals.

Optionally, the beam management method further includes:
receiving first configuration information sent by the base station, the first configuration information including at least one of:
configuration information for the multiple first beam measurement signals; or
configuration information for the multiple second beam measurement signals.

Optionally, the method further includes:
receiving second configuration information sent by the base station, where the second configuration information includes:
configuration information for multiple third beam measurement signals, where the third beam measurement signals are associated with candidate transmission beams of the base station;
configuration information for multiple fourth beam measurement signals, where the fourth beam measurement signals are associated with candidate transmission beams of the relay node.

Optionally, the method further includes:
detecting the multiple third beam measurement signals according to the second configuration information, and taking candidate transmission beams associated with a first target beam measurement signal set as a first candidate beam set, where the first target beam measurement signal set includes beam measurement signals that satisfy a third threshold condition among the multiple third beam measurement signals; and/or,
detecting the multiple fourth beam measurement signals according to the second configuration information, and taking candidate transmission beams associated with a second target beam measurement signal set as a second candidate beam set, where the second target beam measurement signal set includes beam measurement signals that satisfy a fourth threshold condition among the multiple fourth beam measurement signals.

Optionally, the method further includes:
sending candidate beam information to the base station, where the candidate beam information includes at least one of:
third information, the third information being configured to indicate the first candidate beam set;
fourth information, the fourth information being configured to indicate the second candidate beam set.

Optionally, in a case where the first beam measurement signals and the second beam measurement signals are periodically measured, a measurement period of the first beam measurement signals is greater than or equal to a measurement period of the second beam measurement signals.

Optionally, the relay node includes: a Reconfigurable Intelligent Surface (RIS) array and an RIS control node.

Optionally, a position of the RIS array and a position of the RIS control node satisfy Quasi Co-Location (QCL).

In a second aspect, to solve the above technical problem, an embodiment of this disclosure provides a beam management method, applied to a relay node, including:
sending multiple first beam measurement signals to a terminal, where the first beam measurement signals are associated with transmission beams of a base station;
sending multiple second beam measurement signals to the terminal, where the second beam measurement signals are associated with transmission beams of the relay node.

Optionally, before sending the multiple second beam measurement signals to the terminal, the method further includes:
receiving third configuration information sent by the base station, the third configuration information including at least one of:
configuration information for the second beam measurement signals; or
state control information for the relay node.

Optionally, the relay node includes: a Reconfigurable Intelligent Surface (RIS) array and an RIS control node.

Optionally, a position of the RIS array and a position of the RIS control node satisfy Quasi Co-Location (QCL).

In a third aspect, to solve the above technical problem, an embodiment of this disclosure provides a beam management method, applied to a base station, including:
sending third configuration information to a relay node, the third configuration information including at least one of:
configuration information for multiple second beam measurement signals, where the second beam measurement signals are associated with transmission beams of the relay node; or
state control information for the relay node.

Optionally, after sending the third configuration information to the relay node, the method further includes:
receiving a beam failure message sent by a terminal, the beam failure message carrying at least one of:
first information, the first information being configured to identify that a beam failure occurs on multiple first beam measurement signals, where the first beam measurement signals are associated with transmission beams of the base station;
second information, the second information being configured to identify that a beam failure occurs on the multiple second beam measurement signals.

Optionally, before receiving the beam failure message sent by the terminal, the method further includes:
sending first configuration information to the terminal, the first configuration information including at least one of:
configuration information for the multiple first beam measurement signals; or
configuration information for the multiple second beam measurement signals.

Optionally, the method further includes:
sending second configuration information to a terminal, the second configuration information including:
configuration information for multiple third beam measurement signals, where the third beam measurement signals are associated with candidate transmission beams of the base station;
configuration information for multiple fourth beam measurement signals, where the fourth beam measurement signals are associated with candidate transmission beams of the relay node.

Optionally, after sending the second configuration information to the terminal, the method further includes:
receiving candidate beam information sent by the terminal, where the candidate beam information includes at least one of:
third information, the third information being configured to indicate a first candidate beam set;
fourth information, the fourth information being configured to indicate a second candidate beam set.

In a fourth aspect, to solve the above technical problem, an embodiment of this disclosure provides a terminal, including: a transceiver, a memory, a processor, and a computer program stored on the memory and executable by the processor; the processor is configured to read a program in the memory to perform:
receiving a beam measurement signal set sent by a relay node, where the beam measurement signal set includes multiple first beam measurement signals and multiple second beam measurement signals, the first beam measurement signals are associated with transmission beams of a base station, and the second beam measurement signals are associated with transmission beams of the relay node;
performing beam failure detection according to the multiple first beam measurement signals and the multiple second beam measurement signals.

Optionally, the processor is further configured to read a program in the memory to perform:
determining whether a beam failure occurs on a first link corresponding to the multiple first beam measurement signals, where the first link is a concatenated channel from the base station to the relay node and then to the terminal;
determining whether a beam failure occurs on a second link corresponding to the multiple second beam measurement signals, where the second link is a channel from the relay node to the terminal;
in a case where it is determined that beam failures occur on both the first link and the second link, determining that a beam failure occurs on the channel from the relay node to the terminal;
in a case where it is determined that a beam failure occurs on the first link and no beam failure occurs on the second link, determining that a beam failure occurs on a channel from the base station to the relay node.

Optionally, the processor is further configured to read a program in the memory to perform:
sending a beam failure message to a base station, the beam failure message carrying at least one of:
first information, the first information being configured to identify that a beam failure occurs on the multiple first beam measurement signals;
second information, the second information being configured to identify that a beam failure occurs on the multiple second beam measurement signals.

Optionally, the processor is further configured to read a program in the memory to perform:
obtaining a first counter value of a first counter, where the first counter value is a count of times a measurement value of each first beam measurement signal does not satisfy a first threshold condition;
determining whether a beam failure occurs on the first link corresponding to the multiple first beam measurement signals according to multiple first counter values corresponding to the multiple first beam measurement signals.

Optionally, the processor is further configured to read a program in the memory to perform:
obtaining a second counter value of a second counter, where the second counter value is a count of times a measurement value of each second beam measurement signal does not satisfy a second threshold condition;
determining whether a beam failure occurs on the second link corresponding to the multiple second beam measurement signals according to multiple second counter values corresponding to the multiple second beam measurement signals.

Optionally, the processor is further configured to read a program in the memory to perform:
receiving first configuration information sent by the base station, the first configuration information including at least one of:
configuration information for the multiple first beam measurement signals; or
configuration information for the multiple second beam measurement signals.

Optionally, the processor is further configured to read a program in the memory to perform:
receiving second configuration information sent by the base station, the second configuration information including:
configuration information for multiple third beam measurement signals, where the third beam measurement signals are associated with candidate transmission beams of the base station;
configuration information for multiple fourth beam measurement signals, where the fourth beam measurement signals are associated with candidate transmission beams of the relay node.

Optionally, the processor is further configured to read a program in the memory to perform:
detecting the multiple third beam measurement signals according to the second configuration information, and taking candidate transmission beams associated with a first target beam measurement signal set as a first candidate beam set, where the first target beam measurement signal set includes beam measurement signals that satisfy a third threshold condition among the multiple third beam measurement signals; and/or,
detecting the multiple fourth beam measurement signals according to the second configuration information, and taking candidate transmission beams associated with a second target beam measurement signal set as a second candidate beam set, where the second target beam measurement signal set includes beam measurement signals that satisfy a fourth threshold condition among the multiple fourth beam measurement signals.

Optionally, the processor is further configured to read a program in the memory to perform:
sending candidate beam information to the base station, where the candidate beam information includes at least one of:
third information, the third information being configured to indicate the first candidate beam set;
fourth information, the fourth information being configured to indicate the second candidate beam set.

Optionally, in a case where the first beam measurement signals and the second beam measurement signals are periodically measured, a measurement period of the first beam measurement signals is greater than or equal to a measurement period of the second beam measurement signals.

Optionally, the relay node includes: a Reconfigurable Intelligent Surface (RIS) array and an RIS control node.

Optionally, a position of the RIS array and a position of the RIS control node satisfy Quasi Co-Location (QCL).

In a fifth aspect, to solve the above technical problem, an embodiment of this disclosure provides a relay node, including: a transceiver, a memory, a processor, and a computer program stored on the memory and executable by the processor; the processor is configured to read a program in the memory to perform:
sending multiple first beam measurement signals to a terminal, where the first beam measurement signals are associated with transmission beams of a base station;
sending multiple second beam measurement signals to the terminal, where the second beam measurement signals are associated with transmission beams of the relay node.

Optionally, the processor is further configured to read a program in the memory to perform:
receiving third configuration information sent by the base station, the third configuration information including at least one of:
configuration information for the second beam measurement signals; or
state control information for the relay node.

Optionally, the relay node includes: a Reconfigurable Intelligent Surface (RIS) array and an RIS control node.

Optionally, a position of the RIS array and a position of the RIS control node satisfy Quasi Co-Location (QCL).

In a sixth aspect, to solve the above technical problem, an embodiment of this disclosure provides a base station, including: a transceiver, a memory, a processor, and a computer program stored on the memory and executable by the processor; the processor is configured to read a program in the memory to perform:
sending third configuration information to a relay node, the third configuration information including at least one of:
configuration information for multiple second beam measurement signals, where the second beam measurement signals are associated with transmission beams of the relay node; or
state control information for the relay node.

Optionally, the processor is further configured to read a program in the memory to perform:
receiving a beam failure message sent by a terminal, the beam failure message carrying at least one of:
first information, the first information being configured to identify that a beam failure occurs on multiple first beam measurement signals, where the first beam measurement signals are associated with transmission beams of the base station;
second information, the second information being configured to identify that a beam failure occurs on the multiple second beam measurement signals.

Optionally, the processor is further configured to read a program in the memory to perform:
sending first configuration information to the terminal, the first configuration information including at least one of:
configuration information for the multiple first beam measurement signals; or
configuration information for the multiple second beam measurement signals.

Optionally, the processor is further configured to read a program in the memory to perform:
sending second configuration information to a terminal, the second configuration information including:
configuration information for multiple third beam measurement signals, where the third beam measurement signals are associated with candidate transmission beams of the base station;
configuration information for multiple fourth beam measurement signals, where the fourth beam measurement signals are associated with candidate transmission beams of the relay node.

Optionally, the processor is further configured to read a program in the memory to perform:
receiving candidate beam information sent by the terminal, where the candidate beam information includes at least one of:
third information, the third information being configured to indicate a first candidate beam set;
fourth information, the fourth information being configured to indicate a second candidate beam set.

In a seventh aspect, to solve the above technical problem, an embodiment of this disclosure provides a beam management apparatus, applied to a terminal, the apparatus including:
a first receiving module, configured to receive a beam measurement signal set sent by a relay node, where the beam measurement signal set includes multiple first beam measurement signals and multiple second beam measurement signals, the first beam measurement signals are associated with transmission beams of a base station, and the second beam measurement signals are associated with transmission beams of the relay node;
a beam failure detection module, configured to perform beam failure detection according to the multiple first beam measurement signals and the multiple second beam measurement signals.

In an eighth aspect, to solve the above technical problem, an embodiment of this disclosure provides a beam management apparatus, applied to a relay node, the apparatus including:
a third sending module, configured to send multiple first beam measurement signals to a terminal, where the first beam measurement signals are associated with transmission beams of a base station;
a fourth sending module, configured to send multiple second beam measurement signals to the terminal, where the second beam measurement signals are associated with transmission beams of the relay node.

In a ninth aspect, to solve the above technical problem, an embodiment of this disclosure provides a beam management apparatus, applied to a base station, the apparatus including:
a fifth sending module, configured to send third configuration information to a relay node, the third configuration information including at least one of:
configuration information for multiple second beam measurement signals, where the second beam measurement signals are associated with transmission beams of the relay node; or
state control information for the relay node.

In a tenth aspect, to solve the above technical problem, an embodiment of this disclosure provides a processor-readable storage medium, where the processor-readable storage medium stores a computer program, the computer program being configured to cause a processor to perform the beam management method according to any one of the first to twelfth claims, or to perform the beam management method according to any one of the thirteenth to sixteenth claims, or to perform the beam management method according to any one of the seventeenth to twenty-first claims.

The beneficial effects of the above solutions of this disclosure are as follows:
In the above embodiments, the terminal receives a beam measurement signal set sent by a relay node, where the beam measurement signal set includes multiple first beam measurement signals and multiple second beam measurement signals, the first beam measurement signals are associated with transmission beams of a base station, and the second beam measurement signals are associated with transmission beams of the relay node; and performs a beam failure detection according to the multiple first beam measurement signals and the multiple second beam measurement signals. In this way, the specific link where the beam failure occurs can be accurately determined, the complexity of beam measurement can be reduced, and the time required for beam failure recovery can be shortened.

### BRIEF DESCRIPTION OF THE DRAWINGS

FIG. 1 is a first flowchart of a beam management method according to an embodiment of this disclosure;
FIG. 2 is a schematic diagram of a RIS-assisted wireless communication link model according to an embodiment of this disclosure;
FIG. 3 is a second flowchart of a beam management method according to an embodiment of this disclosure;
FIG. 4 is a third flowchart of a beam management method according to an embodiment of this disclosure;
FIG. 5 is a first schematic diagram of a beam management apparatus according to an embodiment of this disclosure;
FIG. 6 is a second schematic diagram of a beam management apparatus according to an embodiment of this disclosure;
FIG. 7 is a third schematic diagram of a beam management apparatus according to an embodiment of this disclosure;
FIG. 8 is a schematic diagram of a hardware structure of a terminal according to an embodiment of this disclosure;
FIG. 9 is a schematic diagram of a hardware structure of a relay node according to an embodiment of this disclosure; and
FIG. 10 is a schematic diagram of a hardware structure of a base station according to an embodiment of this disclosure.

### DETAILED DESCRIPTION

The technical solutions in the embodiments of this disclosure will be clearly and completely described below with reference to the accompanying drawings in the embodiments of this disclosure. Apparently, the described embodiments are only some rather than all of the embodiments of this disclosure. All other embodiments obtained by a person of ordinary skill in the art based on the embodiments of this disclosure without creative efforts shall fall within the protection scope of this disclosure.

The term "and/or" in the embodiments of this disclosure describes the association relationship of associated objects, indicating that there may be three relationships. For example, A and/or B may indicate: A alone, both A and B, or B alone. The character "/" generally indicates that the associated objects are in an "or" relationship.

In the embodiments of the present disclosure, the term "a plurality of" refers to two or more, and other quantifiers are to be construed similarly.

The terminal devices involved in the embodiments of this disclosure may refer to devices that provide users with voice and/or data connectivity, handheld devices with wireless connection functions, or other processing devices connected to wireless modems. The names of terminal devices may vary in different systems. For example, in 5G systems, terminal devices may be referred to as User Equipment (UE). Wireless terminal devices may communicate with one or more core networks (CN) via a Radio Access Network (RAN). Wireless terminal devices may be mobile terminal devices, such as mobile phones (or "cellular" phones) and computers with mobile terminal devices, such as portable, pocket-sized, handheld, computer-built-in, or vehicle-mounted mobile devices, which exchange voice and/or data with the radio access network. For example, Personal Communication Service (PCS) phones, cordless phones, Session Initiation Protocol (SIP) phones, Wireless Local Loop (WLL) stations, Personal Digital Assistants (PDAs), and other devices. Wireless terminal devices may also be referred to as systems, subscriber units, subscriber stations, mobile stations, mobiles, remote stations, access points, remote terminals, access terminals, user terminals, user agents, user devices, or user equipment. The embodiments of this disclosure do not limit these terms.

The network devices involved in the embodiments of this disclosure may be base stations, which may include multiple cells serving terminals. Depending on the specific application scenario, base stations may also be referred to as access points or may be devices in the access network that communicate with wireless terminal devices over the air interface through one or more sectors, or other names. Network devices may be used to interchange received air frames with Internet Protocol (IP) packets, acting as routers between wireless terminal devices and the rest of the access network, where the rest of the access network may include IP communication networks. Network devices may also coordinate the management of attributes for the air interface. For example, the network devices involved in the embodiments of this disclosure may be Base Transceiver Stations (BTS) in Global System for Mobile Communications (GSM) or Code Division Multiple Access (CDMA), or NodeB in Wide-band Code Division Multiple Access (WCDMA), or evolved Node B (eNB or e-NodeB) in Long Term Evolution (LTE) systems, or gNB in 5G network architectures (next generation systems), or Home evolved NodeB (HeNB), relay nodes, femto base stations, pico base stations, etc. The embodiments of this disclosure do not limit these terms. In some network architectures, network devices may include centralized unit (CU) nodes and distributed unit (DU) nodes, which may also be geographically separated.

Network devices and terminal devices may use one or more antennas for Multi-Input Multi-Output (MIMO) transmission. MIMO transmission may be Single User MIMO (SU-MIMO) or Multiple User MIMO (MU-MIMO). Depending on the form and number of antenna combinations, MIMO transmission may be 3D-MIMO, FD-MIMO, or massive-MIMO, or may be diversity transmission, precoding transmission, or beamforming transmission, etc.

The following first introduces the content related to the solutions provided in the embodiments of this disclosure.

First, for high-frequency millimeter-wave communications, if a beam is blocked, communication interruption can easily occur. This is because high-frequency wavelengths are short, with poor reflection and diffraction performance, and most of the transmission energy is concentrated on the line-of-sight propagation path. Therefore, designing mechanisms that can quickly recover from beam blockage and ensure the reliability and robustness of control channel transmission has become an important research topic in high-frequency transmission.

The Fifth Generation Mobile Communication Technology (5G) New Radio (NR) downlink control channel supports analog beamforming. An important challenge for analog beamforming in high-frequency bands is the large propagation loss of transmitted signals and the high probability of blockage. For a blocked Physical Downlink Control Channel (PDCCH), the terminal (UE) will not be able to accurately obtain the control information for downlink transmission, resulting in issues such as reduced transmission rates, increased scheduling delays, and degraded user experience. To reduce the probability of blockage, 5G NR supports dividing downlink control resources into different Control Resource Sets (CORESETs) and configuring the downlink analog beams for each CORESET in a semi-static manner. The base station (gNB) can choose to transmit the PDCCH in one of multiple CORESETs, and the terminal blindly decodes the PDCCH in the configured multiple CORESETs. Due to the limited PDCCH detection capability of the UE, the number of CORESETs configured for the UE in each direction will be reduced. For example, in NR R15, it is specified that each UE can be configured with a maximum of 3 CORESETs in one Bandwidth Part (BWP). Theoretically, if the angular spread of the transmission beam is wide enough to cover the entire angular coverage area of the cell, there will be no problem of beam blockage. However, to obtain higher beamforming gain, in high-frequency millimeter-wave communications, the angular coverage of the PDCCH is limited, which can easily cause coverage holes in the control channel and fail to ensure reliable reception of the control channel.

Currently, for downlink beam failure detection, one solution is to use implementation methods to solve the problem. For example, for a downlink data transmission process, if the UE does not detect the downlink control channel for a long time, it will not send feedback acknowledgment information in the uplink. Based on the phenomenon of not receiving feedback acknowledgment messages for a long time, the base station can determine that a downlink beam failure has occurred. In a single-hop channel, the base station can even determine which direction's downlink transmission beam has failed. The uplink process can also determine whether a beam failure has occurred through similar methods. Through regular beam measurement and reporting mechanisms over a long period, the base station can detect coverage holes in the control channel. However, this process is too long for data transmission and cannot support fast beam switching or solve the beam blockage problem in high-frequency transmission. In short, the beam failure detection scheme based on implementation methods cannot meet the requirements for fast and reliable PDCCH detection needed for service transmission, which will cause serious degradation of transmission performance and quality.

The NR protocol defines another fast and reliable beam failure detection and recovery process, enabling the network side to quickly recover from beam failure during transmission. The base station can quickly switch PDCCH transmission from one beam to another, avoiding the impact of beam blockage on transmission performance, so that the UE can receive control information and resume data transmission. The new beam selected by the base station is obtained based on the information reported by the UE, which includes the beam failure event detected by the UE and the new beam. Based on the information reported by the UE, the base station selects a new beam to transmit the PDCCH. The new beam reported by the UE must meet the system's index requirements for transmission performance.

The definition of beam failure in NR is: within a continuous period of time, the quality of each downlink control channel beam received by the UE is below a specified threshold, making the UE unable to effectively receive the control information sent by the PDCCH.

Assume that the base station has M beams for downlink control channel transmission, and configures dedicated reference signals (Synchronization Signal and PBCH block (SSB) or Channel State Information Reference Signal (CSI-RS)) for each beam. The UE measures the Block Error Rate (BLER) of the reference signals of these M beams to determine whether the downlink control channel meets the reception quality requirements. If the quality of all M beams is below the established BLER threshold, the UE considers that a beam failure event has occurred.

For new beam reporting, the base station configures a corresponding reference signal resource set for the UE, where these reference signals correspond to the candidate beam set. The UE determines the transmit-receive beam pair for the transmission link by measuring the reference signal set. After completing the measurement, the UE reports the new candidate beam to the network. The selected new candidate beam must meet the performance threshold requirements.

During the beam recovery phase, the network will configure a dedicated CORESET for the UE, called the CORESET_Beam Failure Recovery (CORESET_BFR), for beam recovery control signaling transmission. After the UE measures and reports the beam failure message, the UE starts receiving the PDCCH transmitted in the CORESET_BFR and assumes that the beam used is the newly reported candidate beam. Corresponding to the UE reporting process, the base station will transmit the PDCCH using the new beam in the CORESET_BFR. When the UE detects the PDCCH, it will consider that the reported beam failure event and the new candidate beam have been correctly received by the base station. After the base station sends the response message in the CORESET_BFR, if the UE does not receive the Radio Resource Control (RRC) reconfiguration message (used for beam configuration of the CORESET set), the CORESET_BFR will serve as another CORESET for scheduling; if the UE receives the RRC reconfiguration message, it will obtain the new beam configuration of the CORESET set according to the configuration information and stop receiving the CORESET_BFR.

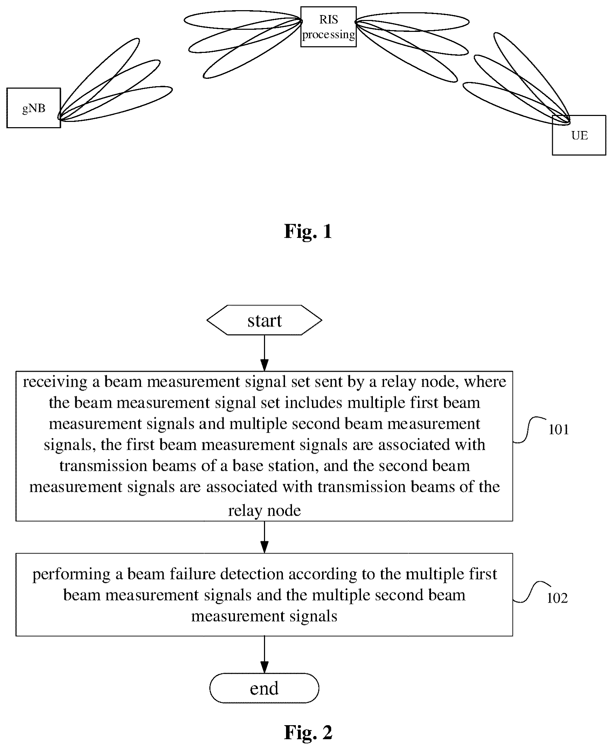

In RIS-assisted wireless communication systems, the signals sent by the base station are reflected/transmitted to the UE by the RIS, passing through two channels: the base station-RIS channel and the RIS-UE channel. As shown in FIG. 1, in the RIS-assisted wireless communication link, the base station-RIS segment of the link is completed by the base station's transmission beam and the RIS's reception beam working together to transmit signals. The RIS-UE segment of the link is completed by the RIS's transmission beam and the UE's reception beam working together to transmit signals. A beam failure in either segment means that a beam failure event has occurred in the entire link.

In the related art, the UE detects whether a beam failure event occurs and reports the beam failure event. In this process, the UE needs to measure beam quality information and determine whether a beam failure event has occurred based on the beam quality information. However, in RIS-assisted wireless communication systems, since the signal ultimately received by the UE is forwarded to the UE by the RIS, the UE actually directly measures the beam quality of the RIS. If a beam failure event has already occurred between the base station's transmission beam and the RIS's reception beam, even if the RIS's transmission beam and the UE's reception beam are aligned, the signal quality monitored by the UE cannot meet the monitoring threshold, and the UE will determine that a beam failure has occurred. Since the measurement reference signal is associated with the base station's transmission beam, the UE cannot determine whether a beam failure event has occurred on the RIS-UE segment of the link and can only directly determine that a beam failure event has occurred on the entire link (including the base station-RIS and RIS-UE segments). Because the UE cannot determine which segment of the link caused the beam failure, during the beam failure recovery process, it is necessary to perform pairwise measurements on all beams of the entire link. This measurement complexity is high, increasing the time required for beam failure recovery and failing to meet the requirements for fast beam switching and solve high-frequency beam blockage.

Based on the above, the embodiments of this disclosure provide a beam management method, apparatus, terminal, relay node, and base station to solve the problem of large processing delays in the beam measurement scheme in the related art.

Referring to FIG. 2, an embodiment of this disclosure provides a beam management method, applied to a terminal, including the following steps:
Step 101: receiving a beam measurement signal set sent by a relay node, where the beam measurement signal set includes multiple first beam measurement signals and multiple second beam measurement signals. The first beam measurement signals are associated with transmission beams of a base station, and the second beam measurement signals are associated with transmission beams of the relay node.

In this step, the multiple first beam measurement signals are used for beam failure detection of the concatenated channel from the base station to the relay node and then to the terminal, and the multiple second beam measurement signals are used for beam failure detection of the second-hop channel from the relay node to the terminal. The channel from the base station to the relay node is the first-hop channel.

The first beam measurement signals and the second beam measurement signals may be configured for the terminal by the network side or determined by the terminal according to predefined rules.

Optionally, there is a one-to-one mapping relationship between the first beam measurement signals and the transmission beams of the base station, and a one-to-one mapping relationship between the second beam measurement signals and the transmission beams of the relay node. That is, each first beam measurement signal is associated with one transmission beam of the base station, and each second beam measurement signal is associated with one transmission beam of the relay node. The transmission beams of the base station are associated with the transmission beams of the relay node, and one transmission beam of the base station is uniquely associated with one transmission beam of the relay node. The transmission beams may be identified by at least one of the following: Transmission Configuration Indicator (TCI) state, Quasi Co-located (QCL) parameters, beam index, etc.

Optionally, the first beam measurement signals and the second beam measurement signals are Beam Failure Detection-Reference Signals (BFD RS).

Step 102: performing beam failure detection according to the multiple first beam measurement signals and the multiple second beam measurement signals.

In the above embodiment, by performing beam failure detection on the multiple first beam measurement signals, it is possible to determine whether a beam failure has occurred on the concatenated channel from the base station to the relay node and then to the terminal. By performing beam failure detection on the multiple second beam measurement signals, it is possible to determine whether a beam failure has occurred on the second-hop channel from the relay node to the terminal. Further, by combining the beam failure conditions of the concatenated channel and the second-hop channel (the link from the relay node to the terminal), the specific link where the beam failure occurs (i.e., the first-hop channel from the base station to the relay node or the second-hop link) can be accurately determined. Through the above embodiment, when a beam failure occurs on the concatenated channel, it is not necessary to perform pairwise measurements on all beams of the entire link. By measuring the multiple first beam measurement signals and the multiple second beam measurement signals, the specific link where the transmission beam fails can be accurately and efficiently determined, reducing the complexity of beam measurement and shortening the processing delay.

In an optional application scenario, the relay node includes: a Reconfigurable Intelligent Surface (RIS) array and an RIS control node.

In this embodiment, the second beam measurement signals are sent by the RIS control node.

Optionally, the second beam measurement signals may be sent by the RIS control node to the RIS array and then reflected to the terminal by the RIS array.

It should be particularly noted that when the RIS control node sends the second beam measurement signals and forwards them to the terminal through the RIS array, the RIS control node is generally not far from the RIS array, located in the near field of the RIS array, and its position is fixed. At this time, the channel from the RIS control node to the RIS array is relatively deterministic. When setting the threshold range for determining whether the RIS beam fails, the channel from the RIS control node to the RIS array needs to be taken into account.

In one embodiment, the position of the RIS array and the position of the RIS control node satisfy Quasi Co-location (QCL). The beams used by the RIS control node and the RIS array may be consistent.

It should be further noted that beam measurement may be periodic, semi-persistent, or aperiodic.

In a specific embodiment, when the first beam measurement signals and the second beam measurement signals are measured periodically, the measurement period of the first beam measurement signals is greater than or equal to the measurement period of the second beam measurement signals.

For example, in a RIS-assisted wireless communication system, one cell is equipped with one base station and four RISs (RIS1, RIS2, RIS3, RIS4). Assume that the base station uses 64 beams to cover the entire service range of the cell, and each RIS uses 16 beams to cover its service range. The RIS has a simple signal transmission function. Assume that the base station, RIS2, and UE3 form the wireless link shown in FIG. 1, and beam measurement is performed periodically. The beam measurement signal period t1 of the base station (e.g., the transmission period of the reference signal) is longer than the beam measurement signal period t2 of the RIS.

In this embodiment, the measurement periods of the first beam measurement signals and the second beam measurement signals may be different. Considering the mobility of the terminal, the measurement period of the first beam measurement signals may be greater than or equal to the measurement period of the second beam measurement signals.

In a specific embodiment of this disclosure, step 102, i.e., performing beam failure detection according to the multiple first beam measurement signals and the multiple second beam measurement signals, includes:
determining whether a beam failure occurs on a first link corresponding to the multiple first beam measurement signals, where the first link is the concatenated channel from the base station to the relay node and then to the terminal;
determining whether a beam failure occurs on a second link corresponding to the multiple second beam measurement signals, where the second link is the channel from the relay node to the terminal (i.e., the second-hop channel);
in a case where it is determined that beam failures occur on both the first link and the second link, determining that a beam failure occurs on the channel from the relay node to the terminal;
in a case where it is determined that a beam failure occurs on the first link and no beam failure occurs on the second link, determining that a beam failure occurs on the channel from the base station to the relay node.

In specific implementation, if one or more of the multiple second beam measurement signals have not experienced beam failure, it is determined that no beam failure has occurred on the second link corresponding to the multiple second beam measurement signals. If one or more of the multiple first beam measurement signals have not experienced beam failure, it is determined that no beam failure has occurred on the first link corresponding to the multiple first beam measurement signals.

It should be noted that if it is only known that beam failures have occurred on the multiple second beam measurement signals, but it is not known whether beam failures have occurred on the multiple first beam measurement signals, it may be due to the mobility of the terminal causing beam failures on the multiple second beam measurement signals. However, if there is a direct link between the base station and the terminal, the first link may not have experienced beam failure. In this case, the terminal can still continue to use the first beam information for communication.

In the above embodiment, by jointly analyzing the beam failure detection results of the multiple first beam measurement signals and the multiple second beam measurement signals, the specific link where the beam failure occurs can be determined, reducing the complexity of beam measurement and shortening the processing delay.

The following introduces two schemes for determining whether a beam failure occurs on the first link corresponding to the multiple first beam measurement signals:

### Scheme 1:

In a specific embodiment of this disclosure, determining whether a beam failure occurs on the first link corresponding to the multiple first beam measurement signals includes:
obtaining a first counter value of a first counter, where the first counter value is the number of times the measurement value of each first beam measurement signal does not satisfy a first threshold condition;
determining whether a beam failure occurs on the first link corresponding to the multiple first beam measurement signals according to multiple first counter values corresponding to the multiple first beam measurement signals.

Optionally, the measurement indexes of the first beam measurement signals include: Reference Signal Received Power (RSRP), Block Error Rate (BLER), Signal to Interference plus Noise Ratio (SINR), etc. It should be noted that different measurement indexes have different threshold requirements. For indexes positively correlated with performance such as RSRP and SINR, the beam quality meets the performance requirements when the measurement value is greater than the threshold, and the beam quality does not meet the performance requirements when the measurement value is less than the threshold. For indexes negatively correlated with beam performance such as BLER, the beam quality meets the performance requirements when the measurement value is less than the threshold, and the beam quality does not meet the performance requirements when the measurement value is greater than the threshold.

In specific implementation, within a certain period of time, multiple measurements will be performed for each beam's corresponding first beam measurement reference signal. When the measurement value of the first beam measurement signal does not meet the first threshold requirement, it is determined that a beam failure has occurred once on the first beam measurement signal, and the first counter counts each measurement. That is, each beam corresponds to a first counter value. When a beam failure occurs on the first beam measurement signal, the first counter corresponding to the first beam measurement signal is incremented by 1. If the first counter value meets a preset condition (e.g., the first counter value is greater than a first value, where the first value is a preset value), it is determined that a beam failure has occurred on the first beam measurement signal. Further, in one implementation, if all of the multiple first counter values corresponding to the multiple first beam measurement signals are greater than the first value, it is determined that a beam failure has occurred on the first link corresponding to the multiple first beam measurement signals. Alternatively, if more than a preset number of the multiple first counter values corresponding to the multiple first beam measurement signals are greater than the first value, it is determined that a beam failure has occurred on the first link corresponding to the multiple first beam measurement signals. That is, it can be understood that if a predefined portion (e.g., 50%, 80%, etc.) or all of the multiple first counter values are greater than the first value, it is determined that a beam failure has occurred on the first link corresponding to the multiple first beam measurement signals.

It should be noted that when the time window T is exceeded, the first counter is cleared.

### Scheme 2:

In another embodiment of this disclosure, determining whether a beam failure occurs on the first link corresponding to the multiple first beam measurement signals includes:
obtaining a third counter value of a third counter, where the third counter value is the number of times the measurement values of the multiple first beam measurement signals all do not meet a third threshold requirement;
if the third counter value is greater than a third value, determining that a beam failure has occurred on the first link corresponding to the multiple first beam measurement signals.

In specific implementation, the terminal monitors the downlink first beam measurement signals within a time window T (predefined timing) according to the configuration of the base station. If it is detected that the measurement indexes (e.g., RSRP, BLER, SINR, etc.) of all N first beam measurement signals sent by the base station do not meet the third threshold requirement, a link beam failure is counted once, and the third counter is incremented by 1. N is a positive integer.

The following introduces two schemes for determining whether a beam failure occurs on the second link corresponding to the multiple second beam measurement signals:

### Scheme A:

In a specific embodiment of this disclosure, determining whether a beam failure occurs on the second link corresponding to the multiple second beam measurement signals includes:
obtaining a second counter value of a second counter, where the second counter value is the number of times the measurement value of each second beam measurement signal does not satisfy a second threshold condition;
determining whether a beam failure occurs on the second link corresponding to the multiple second beam measurement signals according to multiple second counter values corresponding to the multiple second beam measurement signals.

Optionally, the measurement indexes of the second beam measurement signals include: RSRP, BLER, SINR, etc.

In specific implementation, within a certain period of time (time window T), multiple measurements will be performed for each beam's corresponding second beam measurement reference signal. When the measurement value of the second beam measurement signal does not meet the second threshold requirement, it is determined that a beam failure has occurred once on the second beam measurement signal, and the second counter counts each measurement. That is, each beam corresponds to a second counter value. When a beam failure occurs on the second beam measurement signal, the second counter corresponding to the second beam measurement signal is incremented by 1. If the second counter value meets a preset condition (e.g., the second counter value is greater than a second value, where the second value is a preset value), it is determined that a beam failure has occurred on the second beam measurement signal. Further, in one implementation, if all of the multiple second counter values corresponding to the multiple second beam measurement signals are greater than the second value, it is determined that a beam failure has occurred on the second link corresponding to the multiple second beam measurement signals. Alternatively, if more than a preset number of the multiple second counter values corresponding to the multiple second beam measurement signals are greater than the second value, it is determined that a beam failure has occurred on the second link corresponding to the multiple second beam measurement signals. That is, it can be understood that if a predefined portion (e.g., 50%, 80%, etc.) or all of the multiple second counter values are greater than the second value, it is determined that a beam failure has occurred on the second link corresponding to the multiple second beam measurement signals.

It should be noted that when the time window T is exceeded, the second counter is cleared.

### Scheme B:

In another specific embodiment of this disclosure, determining whether a beam failure occurs on the second link corresponding to the multiple second beam measurement signals includes:
obtaining a fourth counter value of a fourth counter, where the fourth counter value is the number of times the measurement values of the multiple second beam measurement signals all do not meet a fourth threshold requirement;
if the fourth counter value is greater than a fourth value, determining that a beam failure has occurred on the second link corresponding to the multiple second beam measurement signals.

In specific implementation, the terminal monitors the downlink second beam measurement signals within a time window T (predefined timing duration) according to the configuration of the base station. If it is detected that the measurement indexes (e.g., RSRP, BLER, SINR, etc.) of all M second beam measurement signals sent by the base station do not meet the fourth threshold requirement, a link beam failure is counted once, and the fourth counter is incremented by 1. M is a positive integer.

It should be noted that for the values of the third value in Scheme 2 and the fourth value in Scheme B, factors such as beam coverage range, terminal capability, and beam measurement period need to be comprehensively considered, and they are configured by the base station for the terminal. For example, the configuration is based on the time window T and the beam measurement period t. Within one time window T, x = T/t beam measurements will be performed. The base station can configure for the terminal: third value ≈ 80%x, fourth value ≈ 50%x, where the third value and the fourth value are both positive integers.

For the specific implementation of Scheme 2 and Scheme B, the beam failure detection process may include:
Step 1: measure the multiple first beam measurement signals and the multiple second beam measurement signals to obtain the third counter value and the fourth counter value;
Step 2: clear the third counter and the fourth counter when at least one of the following conditions is met:
   Condition A: the third counter value is greater than the third value;
   Condition B: the fourth counter value is greater than the fourth value;
   Condition C: the third timer and the fourth counter exceed the time window T.

### Step 3: obtain the beam failure detection result.

Specifically, within the time window T, if Condition A is met but Condition B is not met, the terminal determines that a beam failure has occurred on the concatenated channel (base station-relay node-terminal), and the base station beam has failed. If both Condition A and Condition B are met, the terminal determines that a beam failure has occurred on the channel from the relay node to the terminal. If Condition A is not met but Condition B is met, the terminal determines that the link is normal but the transmission beam of the relay node has failed. Otherwise, if the time window T is exceeded, all counts (third count and fourth count) are cleared.

It should be noted that when there is a direct link between the base station and the terminal, it is possible that Condition A is not met but Condition B is met.

The following introduces the recovery process after beam failure for specific embodiments.

In an embodiment of this disclosure, after performing beam failure detection according to the multiple first beam measurement signals and the multiple second beam measurement signals, the method further includes:
sending a beam failure message to the base station, where the beam failure message carries at least one of the following:
first information, used to identify that a beam failure has occurred on the multiple first beam measurement signals;
second information, used to identify that a beam failure has occurred on the multiple second beam measurement signals.

Optionally, the beam failure message may also carry fifth information, used to identify that no beam failure has occurred on the multiple first beam measurement signals but a beam failure has occurred on the multiple second beam measurement signals.

In the above embodiments, a beam failure event is reported to the base station through a beam failure message, enabling the base station to identify the specific link where the beam failure occurs.

It should be noted that for new candidate beams, they can be reported together with the beam failure event or reported separately.

In one embodiment of the present disclosure, before step 101, the method further includes:
receiving first configuration information sent by the base station, where the first configuration information includes at least one of:
configuration information for the plurality of first beam measurement signals; or
configuration information for the plurality of second beam measurement signals.

Optionally, the first configuration information may further include a measurement period for the first beam measurement signals and a measurement period for the second beam measurement signals.

The first configuration information may be sent by the base station to the relay node via a PDCCH and then forwarded to the terminal.

For example, the base station configures a corresponding beam measurement resource set (e.g., L first beam measurement signals, such as L first reference signals) for the terminal through the first configuration information, where each first beam measurement signal corresponds to a candidate transmission beam of the base station. The base station also configures a set of K second beam measurement signals for the terminal through the first configuration information, where each second beam measurement signal corresponds to a candidate transmission beam of the RIS.

In one embodiment of the present disclosure, the method further includes:
receiving second configuration information sent by the base station, where the second configuration information includes:
configuration information for a plurality of third beam measurement signals, where the third beam measurement signals are associated with candidate transmission beams of the base station; and
configuration information for a plurality of fourth beam measurement signals, where the fourth beam measurement signals are associated with candidate transmission beams of the relay node.

The second configuration information may be sent by the base station to the relay node via a PDCCH and then forwarded to the terminal.

Optionally, each third beam measurement signal is associated with a candidate transmission beam of the base station, and each fourth beam measurement signal is associated with a candidate transmission beam of the relay node.

In one embodiment of the present disclosure, after receiving the second configuration information sent by the base station, the method further includes:
detecting the plurality of third beam measurement signals according to the second configuration information, and taking candidate transmission beams associated with a first target beam measurement signal set as a first candidate beam set, where the first target beam measurement signal set includes beam measurement signals that satisfy a third threshold condition among the plurality of third beam measurement signals; and/or
detecting the plurality of fourth beam measurement signals according to the second configuration information, and taking candidate transmission beams associated with a second target beam measurement signal set as a second candidate beam set, where the second target beam measurement signal set includes beam measurement signals that satisfy a fourth threshold condition among the plurality of fourth beam measurement signals.

In the implementation, for application scenarios where the relay node is an RIS, the terminal detects the plurality of third beam measurement signals and/or the plurality of fourth beam measurement signals according to the second configuration information sent by the base station. It selects base station beams corresponding to reference signals that meet the third threshold requirement as new candidate base station beams, and/or selects RIS beams corresponding to RIS beam measurement signals that meet the fourth threshold as new candidate RIS beams. If multiple candidate beams of the base station meet the threshold requirement, the terminal selects one base station beam (e.g., the strongest one) as the candidate base station beam according to requirements. Similarly, if multiple candidate beams of the RIS meet the threshold requirement, the terminal selects one beam (e.g., the strongest one) as the candidate RIS beam according to requirements.

In one embodiment of the present disclosure, the beam management method further includes:
sending candidate beam information to the base station, where the candidate beam information includes at least one of:
third information, where the third information is used to indicate the first candidate beam set; or
fourth information, where the fourth information is used to indicate the second candidate beam set.

It should be noted that beam failure detection and candidate beam measurement can be performed simultaneously, or candidate beam measurement can precede beam failure detection, or it can occur after a beam failure event is detected, with no limitation imposed here. Additionally, depending on the terminal's determination of the beam failure event, the new beam measurement process can be appropriately simplified. For example, if an RIS beam failure is known, only the fourth beam measurement signals of the RIS candidate beam set may be measured during new beam determination.

Specifically, when the terminal detects a beam failure event but has not yet reported it to the base station, the information sent by the terminal to the base station includes at least one of: first information, where the first information is used to identify that a beam failure has occurred on the plurality of first beam measurement signals; second information, where the second information is used to identify that a beam failure has occurred on the plurality of second beam measurement signals; third information, where the third information is used to indicate the first candidate beam set; or fourth information, where the fourth information is used to indicate the second candidate beam set.

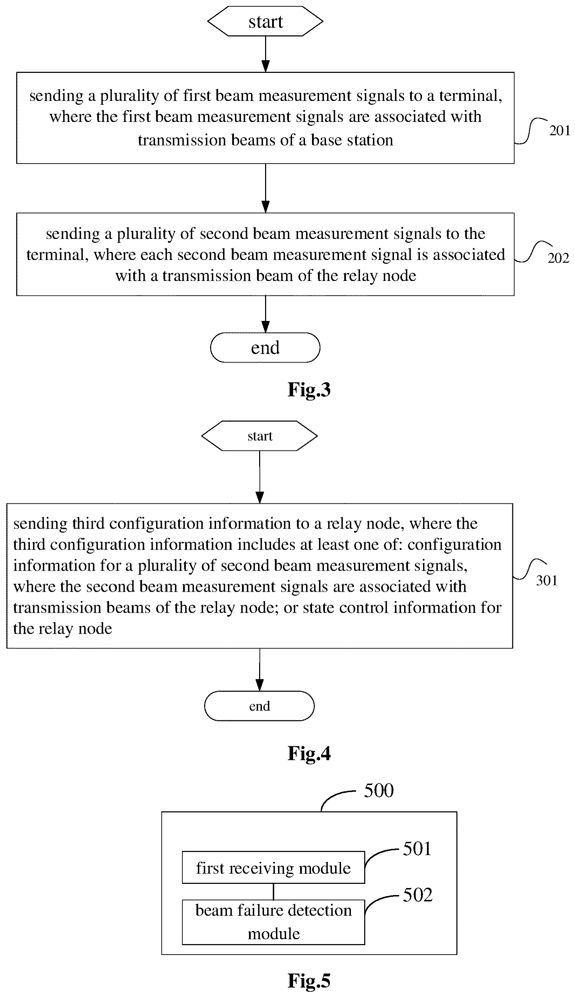

Referring to Figure 3, an embodiment of the present disclosure provides a beam management method applied to a relay node, including the following steps:
Step 201: sending a plurality of first beam measurement signals to a terminal, where the first beam measurement signals are associated with transmission beams of a base station.

In this step, the plurality of first beam measurement signals are used for beam failure detection on the concatenated channel from the base station to the relay node and then to the terminal. The first beam measurement signals are sent by the base station to the relay node and then forwarded to the terminal.

The first beam measurement signals may be configured by the network side for the terminal or determined by the terminal according to predefined rules.

Step 202: sending a plurality of second beam measurement signals to the terminal, where each second beam measurement signal is associated with a transmission beam of the relay node.

In this step, the plurality of second beam measurement signals are used for beam failure detection on the second-hop channel from the relay node to the terminal, where the channel from the base station to the relay node is the first-hop channel.

The second beam measurement signals may be configured by the network side for the terminal or determined by the relay node according to predefined rules.

It should be noted that there is a one-to-one mapping relationship between the first beam measurement signals and the transmission beams of the base station, and a one-to-one mapping relationship between the second beam measurement signals and the transmission beams of the relay node. That is, each first beam measurement signal is associated with a transmission beam of the base station, and each second beam measurement signal is associated with a transmission beam of the relay node. The transmission beams of the base station are associated with the transmission beams of the relay node, where one transmission beam of the base station uniquely corresponds to one transmission beam of the relay node. The transmission beams may be identified by at least one of the following: Transmission Configuration Indicator (TCI) state, Quasi Co-located (QCL) parameters, beam index, etc.

Optionally, the first beam measurement signals and the second beam measurement signals are Beam Failure Detection-Reference Signals (BFD RS).

In the above embodiments, by sending the plurality of first beam measurement signals received from the base station to the terminal and sending the plurality of second beam measurement signals to the terminal, the terminal can determine whether a beam failure has occurred on the concatenated channel from the base station to the relay node and then to the terminal by performing beam failure detection on the plurality of first beam measurement signals. Similarly, it can determine whether a beam failure has occurred on the second-hop channel from the relay node to the terminal by performing beam failure detection on the plurality of second beam measurement signals. By further analyzing the beam failure status of both the concatenated channel and the second-hop channel (the link from the relay node to the terminal), the specific link where the beam failure occurs (i.e., the first-hop channel from the base station to the relay node or the second-hop channel) can be accurately determined. Therefore, through the above embodiments, when the terminal determines that a beam failure has occurred on the concatenated channel, it does not need to perform pairwise measurements on all beams of the entire link. Instead, by measuring the plurality of first beam measurement signals and the plurality of second beam measurement signals, the specific link where the transmission beam failure occurs can be accurately and efficiently determined, reducing the complexity of beam measurement and the time required for beam failure recovery.

In one embodiment of the present disclosure, before sending the plurality of second beam measurement signals to the terminal, the method further includes:
receiving third configuration information sent by the base station, where the third configuration information includes at least one of:
configuration information for the second beam measurement signals; or
state control information for the relay node.

Optionally, the third configuration information may also include a measurement period for the second beam measurement signals.

The third configuration information may be sent by the base station to the relay node via a PDCCH.

In an optional application scenario, the relay node includes: a Reconfigurable Intelligent Surface (RIS) array and an RIS control node.

In this embodiment, the second beam measurement signals are sent by the RIS control node.

Optionally, the second beam measurement signals may be sent by the RIS control node to the RIS array and then reflected to the terminal.

It is particularly important to note that when the RIS control node sends the second beam measurement signals and forwards them to the terminal via the RIS array, the RIS control node is generally located near the RIS array, within the near-field of the RIS array, and its position is fixed. In this case, the channel from the RIS control node to the RIS array is relatively deterministic. When setting the threshold range for determining whether an RIS beam failure has occurred, the channel from the RIS control node to the RIS array must be taken into account.

In one embodiment, the position of the RIS array and the position of the RIS control node satisfy Quasi Co-location (QCL). The beams used by the RIS control node and the RIS array may be consistent.

In this embodiment, the measurement periods for the first beam measurement signals and the second beam measurement signals may differ. Considering the mobility of the terminal, the measurement period for the first beam measurement signals may be greater than or equal to the measurement period for the second beam measurement signals.

Referring to Figure 4, an embodiment of the present disclosure provides a beam management method applied to a base station, including the following steps:
Step 301: sending third configuration information to a relay node, where the third configuration information includes at least one of:
configuration information for a plurality of second beam measurement signals, where the second beam measurement signals are associated with transmission beams of the relay node; or
state control information for the relay node.

Optionally, the third configuration information may also include a measurement period for the second beam measurement signals.

The third configuration information may be sent by the base station to the relay node via a PDCCH.

Optionally, each second beam measurement signal is associated with a transmission beam of the relay node.

In this embodiment, by configuring the plurality of second beam measurement signals for the relay node, the terminal can determine whether a beam failure has occurred on the second-hop channel from the relay node to the terminal by performing beam failure detection on the plurality of second beam measurement signals.

In an optional application scenario, the relay node includes: a Reconfigurable Intelligent Surface (RIS) array and an RIS control node.

In this embodiment, the second beam measurement signals are sent by the RIS control node.

Optionally, the second beam measurement signals may be sent by the RIS control node to the RIS array and then reflected to the terminal.

It is particularly important to note that when the RIS control node sends the second beam measurement signals and forwards them to the terminal via the RIS array, the RIS control node is generally located near the RIS array, within the near-field of the RIS array, and its position is fixed. In this case, the channel from the RIS control node to the RIS array is relatively deterministic. When setting the threshold range for determining whether an RIS beam failure has occurred, the channel from the RIS control node to the RIS array must be taken into account.

In one embodiment, the position of the RIS array and the position of the RIS control node satisfy Quasi Co-location (QCL). The beams used by the RIS control node and the RIS array may be consistent.

In one embodiment of the present disclosure, after sending the third configuration information to the relay node in step 301, the method further includes:
receiving a beam failure message sent by the terminal, where the beam failure message carries at least one of:
first information, where the first information is used to identify that a beam failure has occurred on a plurality of first beam measurement signals, where the first beam measurement signals are associated with transmission beams of the base station; or
second information, where the second information is used to identify that a beam failure has occurred on the plurality of second beam measurement signals.

In one embodiment of the present disclosure, before receiving the beam failure message sent by the terminal, the method further includes:
sending first configuration information to the terminal, where the first configuration information includes at least one of:
configuration information for the plurality of first beam measurement signals; or
configuration information for the plurality of second beam measurement signals.

It should be noted that the third configuration information and the first configuration information sent by the base station to the relay node may be carried in the same PDCCH and sent together to the relay node.

In one embodiment of the present disclosure, the beam management method further includes:
sending second configuration information to the terminal, where the second configuration information includes:
configuration information for a plurality of third beam measurement signals, where the third beam measurement signals are associated with candidate transmission beams of the base station; and
configuration information for a plurality of fourth beam measurement signals, where the fourth beam measurement signals are associated with candidate transmission beams of the relay node.

The second configuration information may be sent by the base station to the relay node via a PDCCH and then forwarded to the terminal.

Specifically, each third beam measurement signal is associated with a candidate transmission beam of the base station, and each fourth beam measurement signal is associated with a candidate transmission beam of the relay node.

In one embodiment of the present disclosure, after sending the second configuration information to the terminal, the method further includes:
receiving candidate beam information sent by the terminal, where the candidate beam information includes at least one of:
third information, where the third information is used to indicate a first candidate beam set; or
fourth information, where the fourth information is used to indicate a second candidate beam set.

Referring to Figure 5, an embodiment of the present disclosure provides a beam management apparatus 500 applied to a terminal, including:
a first receiving module 501, configured to receive a beam measurement signal set sent by a relay node, where the beam measurement signal set includes a plurality of first beam measurement signals and a plurality of second beam measurement signals, where the first beam measurement signals are associated with transmission beams of a base station, and the second beam measurement signals are associated with transmission beams of the relay node;
a beam failure detection module 502, configured to perform a beam failure detection according to the plurality of first beam measurement signals and the plurality of second beam measurement signals.

Optionally, the beam failure detection module 502 includes:
a first determination sub-module, configured to determine whether a beam failure has occurred on a first link corresponding to the plurality of first beam measurement signals, where the first link is the concatenated channel from the base station to the relay node and then to the terminal;
a second determination sub-module, configured to determine whether a beam failure has occurred on a second link corresponding to the plurality of second beam measurement signals, where the second link is the channel from the relay node to the terminal;
a third determination sub-module, configured to determine that a beam failure has occurred on the channel from the relay node to the terminal if it is determined that beam failures have occurred on both the first link and the second link;
a fourth determination sub-module, configured to determine that a beam failure has occurred on the channel from the base station to the relay node if it is determined that a beam failure has occurred on the first link and no beam failure has occurred on the second link.

Optionally, the apparatus 500 further includes:
a first sending module, configured to send a beam failure message to the base station, where the beam failure message carries at least one of:
first information, where the first information is used to identify that a beam failure has occurred on the plurality of first beam measurement signals; or
second information, where the second information is used to identify that a beam failure has occurred on the plurality of second beam measurement signals.

Optionally, the first determination sub-module includes:
a first determination unit, configured to obtain a first counter value of a first counter, where the first counter value is the number of times the measurement value of each first beam measurement signal does not satisfy a first threshold condition;
a second determination unit, configured to determine whether a beam failure has occurred on the first link corresponding to the plurality of first beam measurement signals according to a plurality of the first counter values corresponding to the plurality of first beam measurement signals.

Optionally, the second determination sub-module includes:
a third determination unit, configured to obtain a second counter value of a second counter, where the second counter value is the number of times the measurement value of each second beam measurement signal does not satisfy a second threshold condition;
a fourth determination unit, configured to determine whether a beam failure has occurred on the second link corresponding to the plurality of second beam measurement signals according to a plurality of the second counter values corresponding to the plurality of second beam measurement signals.

Optionally, the apparatus 500 further includes:
a second receiving module, configured to receive first configuration information sent by the base station, where the first configuration information includes at least one of:
configuration information for the plurality of first beam measurement signals; or
configuration information for the plurality of second beam measurement signals.

Optionally, the apparatus 500 further includes:
a third receiving module, configured to receive second configuration information sent by the base station, where the second configuration information includes:
configuration information for a plurality of third beam measurement signals, where the third beam measurement signals are associated with candidate transmission beams of the base station; and
configuration information for a plurality of fourth beam measurement signals, where the fourth beam measurement signals are associated with candidate transmission beams of the relay node.

Optionally, the apparatus 500 further includes:
a first detection module, configured to detect the plurality of third beam measurement signals according to the second configuration information, and take candidate transmission beams associated with a first target beam measurement signal set as a first candidate beam set, where the first target beam measurement signal set includes beam measurement signals that satisfy a third threshold condition among the plurality of third beam measurement signals; and/or
a second detection module, configured to detect the plurality of fourth beam measurement signals according to the second configuration information, and take candidate transmission beams associated with a second target beam measurement signal set as a second candidate beam set, where the second target beam measurement signal set includes beam measurement signals that satisfy a fourth threshold condition among the plurality of fourth beam measurement signals.

Optionally, the apparatus 500 further includes:
a second sending module, configured to send candidate beam information to the base station, where the candidate beam information includes at least one of:
third information, where the third information is used to indicate the first candidate beam set; or
fourth information, where the fourth information is used to indicate the second candidate beam set.

Optionally, when the first beam measurement signals and the second beam measurement signals are periodically measured, the measurement period for the first beam measurement signals is greater than or equal to the measurement period for the second beam measurement signals.

Optionally, the relay node includes: a Reconfigurable Intelligent Surface (RIS) array and an RIS control node.

Optionally, the position of the RIS array and the position of the RIS control node satisfy Quasi Co-location (QCL).

It should be noted that the above apparatus 500 provided in this embodiment can implement all the method steps implemented in the terminal-side method embodiments and achieve the same technical effects. Details and beneficial effects of parts identical to those in the method embodiments are not repeated here.

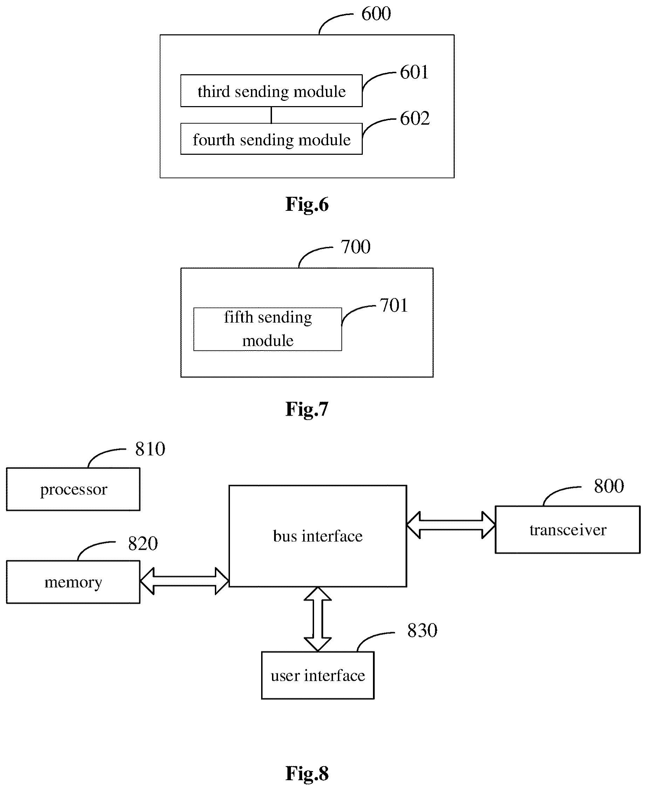

Referring to Figure 6, an embodiment of the present disclosure provides a beam management apparatus 600 applied to a relay node, including:
a third sending module 601, configured to send a plurality of first beam measurement signals to a terminal, where the first beam measurement signals are associated with transmission beams of a base station;
a fourth sending module 602, configured to send a plurality of second beam measurement signals to the terminal, where the second beam measurement signals are associated with transmission beams of the relay node.

Optionally, the apparatus 600 further includes:
a fourth receiving module, configured to receive third configuration information sent by the base station, where the third configuration information includes at least one of:
configuration information for the second beam measurement signals; or
state control information for the relay node.

Optionally, the relay node includes: a Reconfigurable Intelligent Surface (RIS) array and an RIS control node.

Optionally, the position of the RIS array and the position of the RIS control node satisfy Quasi Co-location (QCL).

It should be noted that the above apparatus 600 provided in this embodiment can implement all the method steps implemented in the relay-node-side method embodiments and achieve the same technical effects. Details and beneficial effects of parts identical to those in the method embodiments are not repeated here.

Referring to Figure 7, an embodiment of the present disclosure provides a beam management apparatus 700 applied to a base station, including:
a fifth sending module 701, configured to send third configuration information to a relay node, where the third configuration information includes at least one of:
configuration information for a plurality of second beam measurement signals, where the second beam measurement signals are associated with transmission beams of the relay node; or
state control information for the relay node.

Optionally, the apparatus 700 further includes:
a fifth receiving module, configured to receive a beam failure message sent by a terminal, where the beam failure message carries at least one of:
first information, where the first information is used to identify that a beam failure has occurred on a plurality of first beam measurement signals, where the first beam measurement signals are associated with transmission beams of the base station; or
second information, where the second information is used to identify that a beam failure has occurred on the plurality of second beam measurement signals.

Optionally, the apparatus 700 further includes:
a sixth sending module, configured to send first configuration information to the terminal, where the first configuration information includes at least one of:
configuration information for the plurality of first beam measurement signals; or
configuration information for the plurality of second beam measurement signals.

Optionally, the apparatus 700 further includes:
a seventh sending module, configured to send second configuration information to a terminal, where the second configuration information includes:
configuration information for a plurality of third beam measurement signals, where the third beam measurement signals are associated with candidate transmission beams of the base station; and
configuration information for a plurality of fourth beam measurement signals, where the fourth beam measurement signals are associated with candidate transmission beams of the relay node.

Optionally, the apparatus 700 further includes:
a seventh receiving module, configured to receive candidate beam information sent by the terminal, where the candidate beam information includes at least one of:
third information, where the third information is used to indicate a first candidate beam set; or
fourth information, where the fourth information is used to indicate a second candidate beam set.

It should be noted that the above apparatus 700 provided in this embodiment can implement all the method steps implemented in the base-station-side method embodiments and achieve the same technical effects. Details and beneficial effects of parts identical to those in the method embodiments are not repeated here.

Referring to Figure 8, an embodiment of the present disclosure provides a terminal, including: a processor 810; and a memory 820 connected to the processor 810 via a bus interface, where the memory 820 is used to store programs and data used by the processor 810 during operation. The processor 810 calls and executes the programs and data stored in the memory 820. A transceiver 800 is connected to the bus interface and is used to receive and send data under the control of the processor 810. The processor 810 is configured to read the programs in the memory 820 to perform the following operations:
receiving a beam measurement signal set sent by a relay node, where the beam measurement signal set includes a plurality of first beam measurement signals and a plurality of second beam measurement signals, where the first beam measurement signals are associated with transmission beams of a base station, and the second beam measurement signals are associated with transmission beams of the relay node;
performing a beam failure detection according to the plurality of first beam measurement signals and the plurality of second beam measurement signals.

Optionally, the processor 810 is further configured to read the programs in the memory 820 to perform the following operations:
determining whether a beam failure has occurred on a first link corresponding to the plurality of first beam measurement signals, where the first link is the concatenated channel from the base station to the relay node and then to the terminal;
determining whether a beam failure has occurred on a second link corresponding to the plurality of second beam measurement signals, where the second link is the channel from the relay node to the terminal;
determining that a beam failure has occurred on the channel from the relay node to the terminal if it is determined that beam failures have occurred on both the first link and the second link;
determining that a beam failure has occurred on the channel from the base station to the relay node if it is determined that a beam failure has occurred on the first link and no beam failure has occurred on the second link.

Optionally, the processor 810 is further configured to read the programs in the memory 820 to perform the following operations:
sending a beam failure message to the base station, where the beam failure message carries at least one of:
first information, where the first information is used to identify that a beam failure has occurred on the plurality of first beam measurement signals; or
second information, where the second information is used to identify that a beam failure has occurred on the plurality of second beam measurement signals.

Optionally, the processor 810 is further configured to read the programs in the memory 820 to perform the following operations:
obtaining a first counter value of a first counter, where the first counter value is the number of times the measurement value of each first beam measurement signal does not satisfy a first threshold condition;
determining whether a beam failure has occurred on the first link corresponding to the plurality of first beam measurement signals according to a plurality of the first counter values corresponding to the plurality of first beam measurement signals.

Optionally, the processor 810 is further configured to read the programs in the memory 820 to perform the following operations:
obtaining a second counter value of a second counter, where the second counter value is the number of times the measurement value of each second beam measurement signal does not satisfy a second threshold condition;
determining whether a beam failure has occurred on the second link corresponding to the plurality of second beam measurement signals according to a plurality of the second counter values corresponding to the plurality of second beam measurement signals.

Optionally, the processor 810 is further configured to read the programs in the memory 820 to perform the following operations:
receiving first configuration information sent by the base station, where the first configuration information includes at least one of:
configuration information for the plurality of first beam measurement signals; or
configuration information for the plurality of second beam measurement signals.

Optionally, the processor 810 is further configured to read the programs in the memory 820 to perform the following operations:
receiving second configuration information sent by the base station, where the second configuration information includes:
configuration information for a plurality of third beam measurement signals, where the third beam measurement signals are associated with candidate transmission beams of the base station; and
configuration information for a plurality of fourth beam measurement signals, where the fourth beam measurement signals are associated with candidate transmission beams of the relay node.

Optionally, the processor 810 is further configured to read the programs in the memory 820 to perform the following operations:
detecting the plurality of third beam measurement signals according to the second configuration information, and taking candidate transmission beams associated with a first target beam measurement signal set as a first candidate beam set, where the first target beam measurement signal set includes beam measurement signals that satisfy a third threshold condition among the plurality of third beam measurement signals; and/or
detecting the plurality of fourth beam measurement signals according to the second configuration information, and taking candidate transmission beams associated with a second target beam measurement signal set as a second candidate beam set, where the second target beam measurement signal set includes beam measurement signals that satisfy a fourth threshold condition among the plurality of fourth beam measurement signals.

Optionally, the processor 810 is further configured to read a program in the memory 820 to perform the following process:
sending candidate beam information to the base station, where the candidate beam information includes at least one of:
third information, where the third information is configured to indicate the first candidate beam set;
fourth information, where the fourth information is configured to indicate the second candidate beam set.

Optionally, in a case where the first beam measurement signals and the second beam measurement signals are periodically measured, a measurement period of the first beam measurement signals is greater than or equal to a measurement period of the second beam measurement signals.

Optionally, the relay node includes: a Reconfigurable Intelligent Surface (RIS) array and an RIS control node.

Optionally, a position of the RIS array and a position of the RIS control node satisfy Quasi Co-Location (QCL).

In FIG. 8, the bus architecture may include any number of interconnected buses and bridges, specifically linking various circuits represented by the processor 810 and the memory 820. The bus architecture may also link various other circuits such as peripheral devices, voltage regulators, and power management circuits, which are well-known in the art and therefore will not be further described herein. The bus interface provides an interface. The transceiver 800 may include multiple elements, including a transmitter and a receiver, providing units for communicating with various other devices over transmission media, where these transmission media include wireless channels, wired channels, optical fibers, etc. For different user equipment, the user interface 830 may also be an interface capable of connecting external or internal devices, where the connected devices include but are not limited to a keypad, display, speaker, microphone, joystick, etc.

The processor 810 is responsible for managing the bus architecture and general processing, and the memory 820 may store data used by the processor 810 when performing operations.

Optionally, the processor 810 may be a Central Processing Unit (CPU), Application Specific Integrated Circuit (ASIC), Field-Programmable Gate Array (FPGA), or Complex Programmable Logic Device (CPLD). The processor may also adopt a multi-core architecture.

The processor executes the method provided by any embodiment of the present disclosure by calling computer programs stored in the memory according to obtained executable instructions. The processor and the memory may also be physically separated.

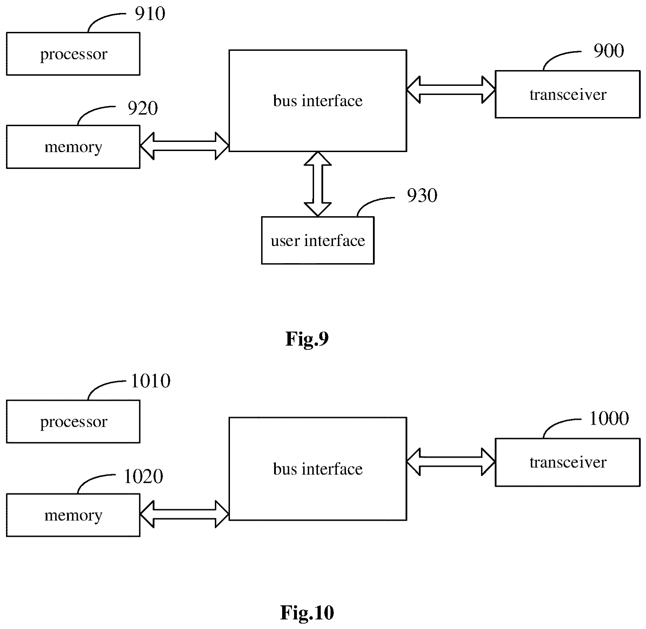

Referring to FIG. 9, an embodiment of the present disclosure provides a relay node, including: a processor 910; and a memory 920 connected to the processor 910 through a bus interface, where the memory 920 is configured to store programs and data used by the processor 910 when performing operations, and the processor 910 calls and executes the programs and data stored in the memory 920.

The transceiver 900 is connected to the bus interface and is configured to receive and send data under the control of the processor 910; the processor 910 is configured to read a program in the memory 920 to perform the following process:
sending a plurality of first beam measurement signals to a terminal, where the first beam measurement signals are associated with transmission beams of a base station;
sending a plurality of second beam measurement signals to the terminal, where the second beam measurement signals are associated with transmission beams of the relay node.

Optionally, the processor 910 is further configured to read a program in the memory 920 to perform the following process:
receiving third configuration information sent by the base station, where the third configuration information includes at least one of:
configuration information for the second beam measurement signals;
state control information for the relay node.

Optionally, the relay node includes: a Reconfigurable Intelligent Surface (RIS) array and an RIS control node.

Optionally, a position of the RIS array and a position of the RIS control node satisfy Quasi Co-Location (QCL).

In FIG. 9, the bus architecture may include any number of interconnected buses and bridges, specifically linking various circuits represented by the processor 910 and the memory 920. The bus architecture may also link various other circuits such as peripheral devices, voltage regulators, and power management circuits, which are well-known in the art and therefore will not be further described herein. The bus interface provides an interface. The transceiver 900 may include multiple elements, including a transmitter and a receiver, providing units for communicating with various other devices over transmission media, where these transmission media include wireless channels, wired channels, optical fibers, etc. The processor 910 is responsible for managing the bus architecture and general processing, and the memory 920 may store data used by the processor 910 when performing operations. For different user equipment, the user interface 930 may also be an interface capable of connecting external or internal devices, where the connected devices include but are not limited to a keypad, display, speaker, microphone, joystick, etc.

The processor 910 may be a Central Processing Unit (CPU), Application Specific Integrated Circuit (ASIC), Field-Programmable Gate Array (FPGA), or Complex Programmable Logic Device (CPLD). The processor may also adopt a multi-core architecture.

Referring to FIG. 10, an embodiment of the present disclosure provides a base station, including: a processor 1010; and a memory 1020 connected to the processor 1010 through a bus interface, where the memory 1020 is configured to store programs and data used by the processor 1010 when performing operations, and the processor 1010 calls and executes the programs and data stored in the memory 1020.

The transceiver 1000 is connected to the bus interface and is configured to receive and send data under the control of the processor 1010; the processor 1010 is configured to read a program in the memory 1020 to perform the following process:
sending third configuration information to a relay node, where the third configuration information includes at least one of:
configuration information for a plurality of second beam measurement signals, where the second beam measurement signals are associated with transmission beams of the relay node;
state control information for the relay node.

Optionally, the processor 1010 is further configured to read a program in the memory 1020 to perform the following process:
receiving a beam failure message sent by a terminal, where the beam failure message carries at least one of:
first information, where the first information is configured to identify that a beam failure occurs on a plurality of first beam measurement signals, where the first beam measurement signals are associated with transmission beams of the base station;
second information, where the second information is configured to identify that a beam failure occurs on the plurality of second beam measurement signals.

Optionally, the processor 1010 is further configured to read a program in the memory 1020 to perform the following process:
sending first configuration information to the terminal, where the first configuration information includes at least one of:
configuration information for the plurality of first beam measurement signals;
configuration information for the plurality of second beam measurement signals.

Optionally, the processor 1010 is further configured to read a program in the memory 1020 to perform the following process:
sending second configuration information to a terminal, where the second configuration information includes:
configuration information for a plurality of third beam measurement signals, where the third beam measurement signals are associated with candidate transmission beams of the base station;
configuration information for a plurality of fourth beam measurement signals, where the fourth beam measurement signals are associated with candidate transmission beams of the relay node.

Optionally, the processor 1010 is further configured to read a program in the memory 1020 to perform the following process:
receiving candidate beam information sent by the terminal, where the candidate beam information includes at least one of:
third information, where the third information is configured to indicate a first candidate beam set;
fourth information, where the fourth information is configured to indicate a second candidate beam set.

In FIG. 10, the bus architecture may include any number of interconnected buses and bridges, specifically linking various circuits represented by the processor 1010 and the memory 1020. The bus architecture may also link various other circuits such as peripheral devices, voltage regulators, and power management circuits, which are well-known in the art and therefore will not be further described herein. The bus interface provides an interface. The transceiver 1000 may include multiple elements, including a transmitter and a receiver, providing units for communicating with various other devices over transmission media, where these transmission media include wireless channels, wired channels, optical fibers, etc. The processor 1010 is responsible for managing the bus architecture and general processing, and the memory 1020 may store data used by the processor 1010 when performing operations.

The processor 1010 may be a Central Processing Unit (CPU), Application Specific Integrated Circuit (ASIC), Field-Programmable Gate Array (FPGA), or Complex Programmable Logic Device (CPLD). The processor may also adopt a multi-core architecture.

The present disclosure also provides a processor-readable storage medium, where the processor-readable storage medium stores a computer program, and the computer program is configured to cause a processor to perform the beam management method on the terminal side, relay node side, or base station side as described above.

The processor-readable storage medium may be any available medium or data storage device that the processor can access, including but not limited to magnetic memory (e.g., floppy disk, hard disk, magnetic tape, magneto-optical disk (MO), etc.), optical memory (e.g., compact disk (CD), digital versatile disc (DVD), Blu-ray disc (BD), high-definition versatile disc (HVD), etc.), and semiconductor memory (e.g., read-only memory (ROM), erasable programmable read-only memory (EPROM), electrically erasable programmable read-only memory (EEPROM), non-volatile memory (NAND FLASH), solid-state drive (SSD), etc.).

It should be noted that the division of units in the embodiments of the present disclosure is schematic and is only a logical function division. In actual implementation, there may be other division methods. In addition, the functional units in various embodiments of the present disclosure may be integrated into one processing unit, or each unit may exist physically alone, or two or more units may be integrated into one unit. The above integrated units may be implemented in the form of hardware or software functional units.

If the integrated unit is implemented in the form of a software functional unit and sold or used as an independent product, it may be stored in a processor-readable storage medium. Based on this understanding, the technical solution of the present disclosure essentially or the part contributing to the prior art or all or part of the technical solution may be embodied in the form of a software product. The computer software product is stored in a storage medium and includes several instructions to enable a computer device (which may be a personal computer, server, or network device, etc.) or processor to perform all or part of the steps of the methods described in various embodiments of the present disclosure. The aforementioned storage medium includes: U disk, mobile hard disk, read-only memory (ROM), random access memory (RAM), magnetic disk, or optical disk, and other media that can store program code.

Those skilled in the art should understand that the embodiments of the present disclosure may be provided as methods, systems, or computer program products. Therefore, the present disclosure may adopt the form of a complete hardware embodiment, a complete software embodiment, or an embodiment combining software and hardware aspects. Moreover, the present disclosure may adopt the form of a computer program product implemented on one or more computer-usable storage media (including but not limited to disk storage and optical storage, etc.) containing computer-usable program code.

These processor-executable instructions may also be stored in a processor-readable memory that can guide a computer or other programmable data processing devices to operate in a specific manner, so that the instructions stored in the processor-readable memory produce a manufactured product including an instruction device, which implements the functions specified in one or more processes in the flowchart and/or one or more blocks in the block diagram.

These processor-executable instructions may also be loaded onto a computer or other programmable data processing devices, so that a series of operation steps are performed on the computer or other programmable devices to produce computer-implemented processing, thereby the instructions executed on the computer or other programmable devices provide steps for implementing the functions specified in one or more processes in the flowchart and/or one or more blocks in the block diagram.

Obviously, those skilled in the art can make various modifications and variations to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

## Claims

1. A beam management method, applied to a terminal, comprising:
receiving a beam measurement signal set sent by a relay node, wherein the beam measurement signal set comprises a plurality of first beam measurement signals and a plurality of second beam measurement signals, the first beam measurement signals are associated with transmission beams of a base station, and the second beam measurement signals are associated with transmission beams of the relay node;
performing a beam failure detection according to the plurality of first beam measurement signals and the plurality of second beam measurement signals.

2. The beam management method according to claim 1, wherein the performing the beam failure detection according to the plurality of first beam measurement signals and the plurality of second beam measurement signals comprises:
determining whether a beam failure occurs on a first link corresponding to the plurality of first beam measurement signals, wherein the first link is a concatenated channel from the base station to the relay node and then to the terminal;
determining whether a beam failure occurs on a second link corresponding to the plurality of second beam measurement signals, wherein the second link is a channel from the relay node to the terminal;
in a case where it is determined that beam failures occur on both the first link and the second link, determining that a beam failure occurs on the channel from the relay node to the terminal; and
in a case where it is determined that a beam failure occurs on the first link and no beam failure occurs on the second link, determining that a beam failure occurs on a channel from the base station to the relay node.

3. The beam management method according to claim 1, further comprising:
sending a beam failure message to a base station, wherein the beam failure message carries at least one of:
first information, the first information being configured to identify that a beam failure occurs on the plurality of first beam measurement signals;
second information, the second information being configured to identify that a beam failure occurs on the plurality of second beam measurement signals.

4. The beam management method according to claim 2, wherein the determining whether a beam failure occurs on the first link corresponding to the plurality of first beam measurement signals comprises:
obtaining a first counter value of a first counter, wherein the first counter value is a count of times a measurement value of each first beam measurement signal does not satisfy a first threshold condition;
determining whether a beam failure occurs on the first link corresponding to the plurality of first beam measurement signals according to a plurality of the first counter values corresponding to the plurality of first beam measurement signals.

5. The beam management method according to claim 2, wherein the determining whether a beam failure occurs on the second link corresponding to the plurality of second beam measurement signals comprises:
obtaining a second counter value of a second counter, wherein the second counter value is a count of times a measurement value of each second beam measurement signal does not satisfy a second threshold condition;
determining whether a beam failure occurs on the second link corresponding to the plurality of second beam measurement signals according to a plurality of the second counter values corresponding to the plurality of second beam measurement signals.

6. The beam management method according to claim 1, further comprising:
receiving first configuration information sent by the base station, the first configuration information comprising at least one of:
configuration information for the plurality of first beam measurement signals; or
configuration information for the plurality of second beam measurement signals.

7. The beam management method according to claim 1, further comprising:
receiving second configuration information sent by the base station, wherein the second configuration information comprises:
configuration information for a plurality of third beam measurement signals, wherein the third beam measurement signals are associated with candidate transmission beams of the base station;
configuration information for a plurality of fourth beam measurement signals, wherein the fourth beam measurement signals are associated with candidate transmission beams of the relay node.

8. The beam management method according to claim 7, further comprising:
detecting the plurality of third beam measurement signals according to the second configuration information, and taking candidate transmission beams associated with a first target beam measurement signal set as a first candidate beam set, wherein the first target beam measurement signal set comprises beam measurement signals that satisfy a third threshold condition among the plurality of third beam measurement signals; and/or,
detecting the plurality of fourth beam measurement signals according to the second configuration information; and taking candidate transmission beams associated with a second target beam measurement signal set as a second candidate beam set, wherein the second target beam measurement signal set comprises beam measurement signals that satisfy a fourth threshold condition among the plurality of fourth beam measurement signals.

9. The beam management method according to claim 8, further comprising:
sending candidate beam information to the base station, wherein the candidate beam information comprises at least one of:
third information, the third information being configured to indicate the first candidate beam set; or
fourth information, the fourth information being configured to indicate the second candidate beam set.

10. The beam management method according to claim 1, wherein in a case where the first beam measurement signals and the second beam measurement signals are periodically measured, a measurement period of the first beam measurement signals is greater than or equal to a measurement period of the second beam measurement signals.

11. The beam management method according to claim 1, wherein the relay node comprises: a Reconfigurable Intelligent Surface (RIS) array and an RIS control node.

12. The beam management method according to claim 11, wherein a position of the RIS array and a position of the RIS control node satisfy Quasi Co-Location (QCL).

13. A beam management method, applied to a relay node, comprising:
sending a plurality of first beam measurement signals to a terminal, wherein the first beam measurement signals are associated with transmission beams of a base station;
sending a plurality of second beam measurement signals to the terminal, wherein the second beam measurement signals are associated with transmission beams of the relay node.

14. The beam management method according to claim 13, wherein before sending the plurality of second beam measurement signals to the terminal, the method further comprises:
receiving third configuration information sent by the base station, the third configuration information comprising at least one of:
configuration information for the second beam measurement signals; or
state control information for the relay node.

15. The beam management method according to claim 13, wherein the relay node comprises: a Reconfigurable Intelligent Surface (RIS) array and an RIS control node.

16. The beam management method according to claim 15, wherein a position of the RIS array and a position of the RIS control node satisfy Quasi Co-Location (QCL).

17. A beam management method, applied to a base station, comprising:
sending third configuration information to a relay node, the third configuration information comprising at least one of:
configuration information for a plurality of second beam measurement signals, wherein the second beam measurement signals are associated with transmission beams of the relay node; or
state control information for the relay node.

18. The beam management method according to claim 17, wherein after sending the third configuration information to the relay node, the method further comprises:
receiving a beam failure message sent by a terminal, the beam failure message carrying at least one of:
first information, the first information being configured to identify that a beam failure occurs on a plurality of first beam measurement signals, wherein the first beam measurement signals are associated with transmission beams of the base station;
second information, the second information being configured to identify that a beam failure occurs on the plurality of second beam measurement signals.

19. The beam management method according to claim 18, wherein before receiving the beam failure message sent by the terminal, the method further comprises:
sending first configuration information to the terminal, the first configuration information comprising at least one of:
configuration information for the plurality of first beam measurement signals; or
configuration information for the plurality of second beam measurement signals.

20. The beam management method according to claim 17, further comprising:
sending second configuration information to a terminal, the second configuration information comprising:
configuration information for a plurality of third beam measurement signals, wherein the third beam measurement signals are associated with candidate transmission beams of the base station;
configuration information for a plurality of fourth beam measurement signals, wherein the fourth beam measurement signals are associated with candidate transmission beams of the relay node.

21. The beam management method according to claim 20, wherein after sending the second configuration information to the terminal, the method further comprises:
receiving candidate beam information sent by the terminal, wherein the candidate beam information comprises at least one of:
third information, the third information being configured to indicate a first candidate beam set;
fourth information, the fourth information being configured to indicate a second candidate beam set.

22. A terminal, comprising: a transceiver, a memory, a processor, and a computer program stored on the memory and executable by the processor; the processor is configured to read a program in the memory to perform:
receiving a beam measurement signal set sent by a relay node, wherein the beam measurement signal set comprises a plurality of first beam measurement signals and a plurality of second beam measurement signals, wherein the first beam measurement signals are associated with transmission beams of a base station, and the second beam measurement signals are associated with transmission beams of the relay node;
performing a beam failure detection according to the plurality of first beam measurement signals and the plurality of second beam measurement signals.

23. The terminal according to claim 22, wherein the processor is further configured to read a program in the memory to perform:
determining whether a beam failure occurs on a first link corresponding to the plurality of first beam measurement signals, wherein the first link is a concatenated channel from the base station to the relay node and then to the terminal;
determining whether a beam failure occurs on a second link corresponding to the plurality of second beam measurement signals, wherein the second link is a channel from the relay node to the terminal;
in a case where it is determined that beam failures occur on both the first link and the second link, determining that a beam failure occurs on the channel from the relay node to the terminal;
in a case where it is determined that a beam failure occurs on the first link and no beam failure occurs on the second link, determining that a beam failure occurs on a channel from the base station to the relay node.

24. The terminal according to claim 22, wherein the processor is further configured to read a program in the memory to perform:
sending a beam failure message to a base station, the beam failure message carrying at least one of:
first information, the first information being configured to identify that a beam failure occurs on the plurality of first beam measurement signals;
second information, the second information being configured to identify that a beam failure occurs on the plurality of second beam measurement signals.

25. The terminal according to claim 23, wherein the processor is further configured to read a program in the memory to perform:
obtaining a first counter value of a first counter, wherein the first counter value is a count of times a measurement value of each first beam measurement signal does not satisfy a first threshold condition;
determining whether a beam failure occurs on the first link corresponding to the plurality of first beam measurement signals according to a plurality of the first counter values corresponding to the plurality of first beam measurement signals.

26. The terminal according to claim 23, wherein the processor is further configured to read a program in the memory to perform:
obtaining a second counter value of a second counter, wherein the second counter value is a count of times a measurement value of each second beam measurement signal does not satisfy a second threshold condition;
determining whether a beam failure occurs on the second link corresponding to the plurality of second beam measurement signals according to a plurality of the second counter values corresponding to the plurality of second beam measurement signals.

27. The terminal according to claim 22, wherein the processor is further configured to read a program in the memory to perform:
receiving first configuration information sent by the base station, the first configuration information comprising at least one of:
configuration information for the plurality of first beam measurement signals;
configuration information for the plurality of second beam measurement signals.

28. The terminal according to claim 22, wherein the processor is further configured to read a program in the memory to perform:
receiving second configuration information sent by the base station, the second configuration information comprising:
configuration information for a plurality of third beam measurement signals, wherein the third beam measurement signals are associated with candidate transmission beams of the base station;
configuration information for a plurality of fourth beam measurement signals, wherein the fourth beam measurement signals are associated with candidate transmission beams of the relay node.

29. The terminal according to claim 28, wherein the processor is further configured to read a program in the memory to perform:
detecting the plurality of third beam measurement signals according to the second configuration information; and taking candidate transmission beams associated with a first target beam measurement signal set as a first candidate beam set, wherein the first target beam measurement signal set comprises beam measurement signals that satisfy a third threshold condition among the plurality of third beam measurement signals; and/or,
detecting the plurality of fourth beam measurement signals according to the second configuration information; and taking candidate transmission beams associated with a second target beam measurement signal set as a second candidate beam set, wherein the second target beam measurement signal set comprises beam measurement signals that satisfy a fourth threshold condition among the plurality of fourth beam measurement signals.

30. The terminal according to claim 29, wherein the processor is further configured to read a program in the memory to perform:
sending candidate beam information to the base station, wherein the candidate beam information comprises at least one of:
third information, the third information being configured to indicate the first candidate beam set;
fourth information, the fourth information being configured to indicate the second candidate beam set.

31. The terminal according to claim 22, wherein in a case where the first beam measurement signals and the second beam measurement signals are periodically measured, a measurement period of the first beam measurement signals is greater than or equal to a measurement period of the second beam measurement signals.

32. The terminal according to claim 22, wherein the relay node comprises: a Reconfigurable Intelligent Surface (RIS) array and an RIS control node.

33. The terminal according to claim 32, wherein a position of the RIS array and a position of the RIS control node satisfy Quasi Co-Location (QCL).

34. A relay node, comprising: a transceiver, a memory, a processor, and a computer program stored on the memory and executable by the processor; the processor is configured to read a program in the memory to perform:
sending a plurality of first beam measurement signals to a terminal, wherein the first beam measurement signals are associated with transmission beams of a base station;
sending a plurality of second beam measurement signals to the terminal, wherein the second beam measurement signals are associated with transmission beams of the relay node.

35. The relay node according to claim 34, wherein the processor is further configured to read a program in the memory to perform:
receiving third configuration information sent by the base station, the third configuration information comprising at least one of:
configuration information for the second beam measurement signals;
state control information for the relay node.

36. The relay node according to claim 34, wherein the relay node comprises: a Reconfigurable Intelligent Surface (RIS) array and an RIS control node.

37. The relay node according to claim 36, wherein a position of the RIS array and a position of the RIS control node satisfy Quasi Co-Location (QCL).

38. A base station, comprising: a transceiver, a memory, a processor, and a computer program stored on the memory and executable by the processor; the processor is configured to read a program in the memory to perform:
sending third configuration information to a relay node, the third configuration information comprising at least one of:
configuration information for a plurality of second beam measurement signals, wherein the second beam measurement signals are associated with transmission beams of the relay node; or
state control information for the relay node.

39. The base station according to claim 38, wherein the processor is further configured to read a program in the memory to perform:
receiving a beam failure message sent by a terminal, the beam failure message carrying at least one of:
first information, the first information being configured to identify that a beam failure occurs on a plurality of first beam measurement signals, wherein the first beam measurement signals are associated with transmission beams of the base station;
second information, the second information being configured to identify that a beam failure occurs on the plurality of second beam measurement signals.

40. The base station according to claim 39, wherein the processor is further configured to read a program in the memory to perform:
sending first configuration information to the terminal, the first configuration information comprising at least one of:
configuration information for the plurality of first beam measurement signals;
configuration information for the plurality of second beam measurement signals.

41. The base station according to claim 38, wherein the processor is further configured to read a program in the memory to perform:
sending second configuration information to a terminal, the second configuration information comprising:
configuration information for a plurality of third beam measurement signals, wherein the third beam measurement signals are associated with candidate transmission beams of the base station;
configuration information for a fourth beam measurement signal set, wherein the fourth beam measurement signals are associated with candidate transmission beams of the relay node.

42. The base station according to claim 41, wherein the processor is further configured to read a program in the memory to perform:
receiving candidate beam information sent by the terminal, wherein the candidate beam information comprises at least one of:
third information, the third information being configured to indicate a first candidate beam set;
fourth information, the fourth information being configured to indicate a second candidate beam set.

43. A beam management apparatus, applied to a terminal, the apparatus comprising:
a first receiving module, configured to receive a beam measurement signal set sent by a relay node; the beam measurement signal set comprises a plurality of first beam measurement signals and a plurality of second beam measurement signals, wherein the plurality of first beam measurement signals are associated with transmission beams of a base station, and the plurality of second beam measurement signals are associated with transmission beams of the relay node;
a beam failure detection module, configured to perform a beam failure detection according to the plurality of first beam measurement signals and the plurality of second beam measurement signals.

44. The apparatus according to claim 43, wherein the beam failure detection module comprises:
a first determining sub-module, configured to determine whether a beam failure occurs on a first link corresponding to the plurality of first beam measurement signals, wherein the first link is a concatenated channel from the base station to the relay node and then to the terminal;
a second determining sub-module, configured to determine whether a beam failure occurs on a second link corresponding to the plurality of second beam measurement signals, wherein the second link is a channel from the relay node to the terminal;
a third determining sub-module, configured to, in a case where it is determined that beam failures occur on both the first link and the second link, determine that a beam failure occurs on the channel from the relay node to the terminal;
a fourth determining sub-module, configured to, in a case where it is determined that a beam failure occurs on the first link and no beam failure occurs on the second link, determine that a beam failure occurs on a channel from the base station to the relay node.

45. The apparatus according to claim 43, further comprising:
a first sending module, configured to send a beam failure message to a base station, the beam failure message carrying at least one of:
first information, the first information being configured to identify that a beam failure occurs on the plurality of first beam measurement signals; or
second information, the second information being configured to identify that a beam failure occurs on the plurality of second beam measurement signals.

46. The apparatus according to claim 44, wherein the first determining sub-module comprises:
a first determining unit, configured to obtain a first counter value of a first counter, wherein the first counter value is a count of times a measurement value of each first beam measurement signal does not satisfy a first threshold condition;
a second determining unit, configured to determine whether a beam failure occurs on the first link corresponding to the plurality of first beam measurement signals according to a plurality of the first counter values corresponding to the plurality of first beam measurement signals.

47. The apparatus according to claim 44, wherein the second determining sub-module comprises:
a third determining unit, configured to obtain a second counter value of a second counter, wherein the second counter value is a count of times a measurement value of each second beam measurement signal does not satisfy a second threshold condition;
a fourth determining unit, configured to determine whether a beam failure occurs on the second link corresponding to the plurality of second beam measurement signals according to a plurality of the second counter values corresponding to the plurality of second beam measurement signals.

48. The apparatus according to claim 43, further comprising:
a second receiving module, configured to receive first configuration information sent by the base station, the first configuration information comprising at least one of:
configuration information for the plurality of first beam measurement signals;
configuration information for the plurality of second beam measurement signals.

49. The apparatus according to claim 43, further comprising:
a third receiving module, configured to receive second configuration information sent by the base station, the second configuration information comprising:
configuration information for a plurality of third beam measurement signals, wherein the third beam measurement signals are associated with candidate transmission beams of the base station;
configuration information for a plurality of fourth beam measurement signals, wherein the fourth beam measurement signals are associated with candidate transmission beams of the relay node.

50. The apparatus according to claim 49, further comprising:
a first detection module, configured to detect the plurality of third beam measurement signals according to the second configuration information; and take candidate transmission beams associated with a first target beam measurement signal set as a first candidate beam set, wherein the first target beam measurement signal set comprises beam measurement signals that satisfy a third threshold condition among the plurality of third beam measurement signals; and/or,
a second detection module, configured to detect the plurality of fourth beam measurement signals according to the second configuration information; and take candidate transmission beams associated with a second target beam measurement signal set as a second candidate beam set, wherein the second target beam measurement signal set comprises beam measurement signals that satisfy a fourth threshold condition among the plurality of fourth beam measurement signals.

51. The apparatus according to claim 50, further comprising:
a second sending module, configured to send candidate beam information to the base station, wherein the candidate beam information comprises at least one of:
third information, the third information being configured to indicate the first candidate beam set;
fourth information, the fourth information being configured to indicate the second candidate beam set.

52. The apparatus according to any one of claims 43 to 51, wherein in a case where the first beam measurement signals and the second beam measurement signals are periodically measured, a measurement period of the first beam measurement signals is greater than or equal to a measurement period of the second beam measurement signals.

53. The apparatus according to any one of claims 43 to 51, wherein the relay node comprises: a Reconfigurable Intelligent Surface (RIS) array and an RIS control node.

54. The apparatus according to claim 53, wherein a position of the RIS array and a position of the RIS control node satisfy Quasi Co-Location (QCL).

55. A beam management apparatus, applied to a relay node, the apparatus comprising:
a third sending module, configured to send a plurality of first beam measurement signals to a terminal, wherein the first beam measurement signals are associated with transmission beams of a base station;
a fourth sending module, configured to send a plurality of second beam measurement signals to the terminal, wherein the second beam measurement signals are associated with transmission beams of the relay node.

56. The apparatus according to claim 55, further comprising:
a fourth receiving module, configured to receive third configuration information sent by the base station, the third configuration information comprising at least one of:
configuration information for the second beam measurement signals; or
state control information for the relay node.

57. The apparatus according to claim 55 or 56, wherein the relay node comprises: a Reconfigurable Intelligent Surface (RIS) array and an RIS control node.

58. The apparatus according to claim 57, wherein a position of the RIS array and a position of the RIS control node satisfy Quasi Co-Location (QCL).

59. A beam management apparatus, applied to a base station, the apparatus comprising:
a fifth sending module, configured to send third configuration information to a relay node, the third configuration information comprising at least one of:
configuration information for a plurality of second beam measurement signals, wherein the second beam measurement signals are associated with transmission beams of the relay node; or
state control information for the relay node.

60. The apparatus according to claim 59, further comprising:
a fifth receiving module, configured to receive a beam failure message sent by a terminal, the beam failure message carrying at least one of:
first information, the first information being configured to identify that a beam failure occurs on a plurality of first beam measurement signals, wherein the first beam measurement signals are associated with transmission beams of the base station;
second information, the second information being configured to identify that a beam failure occurs on the plurality of second beam measurement signals.

61. The apparatus according to claim 60, further comprising:
a sixth sending module, configured to send first configuration information to the terminal, the first configuration information comprising at least one of:
configuration information for the plurality of first beam measurement signals;
configuration information for the plurality of second beam measurement signals.

62. The apparatus according to claim 59, further comprising:
a seventh sending module, configured to send second configuration information to a terminal, the second configuration information comprising:
configuration information for a plurality of third beam measurement signals, wherein the third beam measurement signals are associated with candidate transmission beams of the base station;
configuration information for a plurality of fourth beam measurement signals, wherein the fourth beam measurement signals are associated with candidate transmission beams of the relay node.

63. The apparatus according to claim 62, further comprising:
a seventh receiving module, configured to receive candidate beam information sent by the terminal, wherein the candidate beam information comprises at least one of:
third information, the third information being configured to indicate a first candidate beam set; or
fourth information, the fourth information being configured to indicate a second candidate beam set.

64. A processor-readable storage medium, the processor-readable storage medium storing a computer program, the computer program being configured to cause a processor to perform the beam management method according to any one of claims 1 to 12, or to perform the beam management method according to any one of claims 13 to 16, or to perform the beam management method according to any one of claims 17 to 21.
